# EUROPÄISCHE PATENTANMELDUNG

(11) **EP 3 705 787 A1**
(43) Veröffentlichungstag der Anmeldung: **09.09.2020**
(21) Anmeldenummer: 19161651.5
(22) Anmeldetag: 08.03.2019
(51) Int. Cl.: F24D 3/16, F24D 13/02, F24F 5/00

(54) **MODULARES SYSTEM, STRAHLPLATTENMODUL UND VERFAHREN**

(71) Anmelder: Zehnder Group International AG, 5722 Gränichen (CH)
(72) Erfinder: Weschle, Hans-Peter, 77743 Neuried (DE); Holzwarth, Jörg, 77974 Meissenheim/Kürzell (DE); Iben, Markus, 77963 Schwanau (DE)
(74) Vertreter: Rausch Wanischeck-Bergmann Brinkmann

(57) **Zusammenfassung**

Die Erfindung betrifft ein modulares System zum Aufbau einer hinsichtlich ihrer Flächenerstreckung variablen Strahlplatte, insbesondere Heizstrahlplatte, aufweisend eine Mehrzahl von Strahlplattenmodulen aus welchen die Strahlplatte zusammensetzbar ist, wobei jedes Strahlplattenmodul eine Strahlfläche und zwei auf gegenüberliegenden Seiten der Strahlfläche angeordnete und in Längsrichtung des Strahlplattenmoduls verlaufende Seitenwände aufweist, wobei die Strahlplattenmodule über ihre jeweiligen Seitenwände miteinander verbindbar sind.

## Beschreibung

Die Erfindung betrifft ein modulares System zum Aufbau einer hinsichtlich ihrer Flächenerstreckung variablen Strahlplatte, insbesondere Heizstrahlplatte. Ferner betrifft die Erfindung ein Strahlplattenmodul zur Verwendung in dem erfindungsgemäßen System und ein Verfahren zum Aufbau einer hinsichtlich ihrer Flächenerstreckung variablen Strahlplatte aus dem erfindungsgemäßen modularen System.

Strahlplatten sind aus dem Stand der Technik an sich bekannt. Sie dienen insbesondere in der Ausgestaltung als Deckenstrahlplatte einer Deckenstrahlheizung der Temperieren eines Raums mittels Wärmestrahlung. Hierzu wird die Strahlplatte beispielsweise mittels eines in einem Rohrregister geführten Heizmediums erhitzt. Alternativ kann die Strahlplatte auch elektrisch erhitzt werden.

Deckenstrahlplatten sind im Stand der Technik in Standardmaßen hinsichtlich Länge und Breite erhältlich. In der Regel werden Strahlplatten einstückig aus einem Metallrohling in die gewünschte Form gepresst. Dabei sind Breite und Länge der fertigen Strahlplatte einerseits durch die Maße des Plattenrohlings und andererseits durch die Maße des Pressstempels nach oben hin limitiert. In der Praxis sind Strahlplatten daher produktionsbedingt mit stets der gleichen Länge und in einer bestimmten Anzahl von Breiten herstellbar.

Es ist daher im Stand der Technik nicht möglich, eine Fläche beispielsweise einer Decke mit Deckenstrahlplatten vollständig abzudecken, die hinsichtlich ihrer Breite nicht den Standardmaßen der Strahlplatte entspricht. Zur Lösung werden derzeit mehrere voneinander beabstandete Reihen von in Längsrichtung hintereinander angeordneter Strahlplatten nebeneinander an der Decke angebracht. Dies hat jedoch eine vergleichsweise schlechte Heizleistung zur Folge, da nur ein Teil der Deckenfläche strahlungstechnisch abgedeckt ist. Es verbleiben Lücken, die auch in ästhetischer Hinsicht nicht wünschenswert sind, da sie ein homogenes Flächendesign verhindern.

Ersichtlicherweise ist es auch aus wirtschaftlichen Gründen nicht möglich für jede erdenkliche Deckenfläche eine genau passende Strahlplatte vorzuhalten.

Es ist daher die **Aufgabe** der Erfindung, die Heizleistung von Strahlheizungen, insbesondere Deckenstrahlheizungen, durch eine optimierte Flächennutzung zu verbessern.

Zur **Lösung** der Aufgabe schlägt die Erfindung ein modulares System zum Aufbau einer hinsichtlich ihrer Flächenerstreckung variablen Strahlplatte, insbesondere Deckenstrahlplatte, vor, aufweisend eine Mehrzahl von Strahlplattenmodulen aus welchen die Strahlplatte zusammensetzbar ist, wobei jedes Strahlplattenmodul eine Strahlfläche und zwei auf gegenüberliegenden Seiten der Strahlfläche angeordnete und in Längsrichtung des Strahlplattenmoduls verlaufende Seitenwände aufweist, wobei die Strahlplattenmodule über ihre jeweiligen Seitenwände miteinander, insbesondere lösbar, verbindbar sind.

Die Erfindung stellt in vollkommener Abkehr zum Stand der Technik nicht darauf ab, eine Vielzahl von standardisierten Strahlplatten aneinanderzureihen. Stattdessen kann eine einzige homogene Strahlplatte in gewünschter Größe mittels des erfindungsgemäßen Systems modular zusammengesetzt werden. Dies hat den Vorteil, dass eine lückenlose Strahlfläche bereitgestellt wird, die sowohl hinsichtlich der auf Heizleistung als auch hinsichtlich des optischen Erscheinungsbildes verbessert ist. Die Verbindung der Strahlplattenmodule erfolgt erfindungsgemäß in Breitenrichtung des Moduls über miteinander korrespondierende Seitenränder der Module. Hierdurch kann die resultierende Strahlplatte hinsichtlich ihrer nahezu Breitenerstreckung beliebig ausgebaut werden. Die einzelnen Module können dabei standardisierte Abmessungen aufweisen, wodurch der Produktionsaufwand erheblich vereinfacht ist. Ferner können bestehende Produktionseinrichtungen weiter genutzt werden. Unabhängig von den Abmessungen der Strahlplattenmodule lässt sich der erfindungsgemäße Vorteil erzielen. Sind die Strahlplattenmodule vergleichsweise groß, ist der Fertigungsaufwand vereinfacht, da weniger Module zum Aufbau einer Strahlfläche in gewünschter Größe miteinander verbunden werden müssen. Sind die Strahlplattenmodule vergleichsweise klein, kann eine Strahlfläche aufgebaut werden, die die maximal verfügbare Fläche besser ausnutzt, wodurch sich im Ergebnis eine weiter verbesserte Heizleistung ergibt. Es ist in dieser Hinsicht bevorzugt, dass die Strahlplattenmodule mit unterschiedlichen Breiten, vorzugsweise mit zwei unterschiedlichen Breiten, ausgebildet sind. Hierdurch lässt sich ein besonders vorteilhafter Kompromiss aus Fertigungsaufwand und Flächennutzung erreichen.

Auch hinsichtlich der Längserstreckung der Platten ist ein modularer Aufbau vorgesehen. Dies lässt sich einerseits wie im Falle der Seitenwände vorzugsweise dadurch erreichen, dass die Stirnseiten der Strahlplattenmodule in Längsrichtung unmittelbar miteinander verbunden werden. Gemäß einer alternativen bevorzugten Ausgestaltung der Erfindung ist es jedoch zunächst vorgesehen, dass alle Strahlplattenmodule die gleiche Länge aufweisen. Die Strahlplattenmodule können in diesem Fall in Längsrichtung mittelbar miteinander verbunden werden. Dies geschieht vorzugsweise mittels Kuppelelementen, insbesondere Kuppelblechen. Ein Kuppelelement verbindet bestimmungsgemäß die einander zugewandten Stirnseiten zweier benachbarter Strahlplattenmodule.

Erfindungsgemäß sind die Strahlplattenmodule über ihre Seitenwände miteinander verbindbar. Lösbare und unlösbare Verbindungen sind dabei möglich. "Unlösbare Verbindungen" meint dabei solche Verbindungen, bei denen zwei Module nach der Verbindung nicht wieder beschädigungslos voneinander gelöst werden können. Hierzu zählen insbesondere Schweißverbindungen. Der Vorteil dieser Art der Verbindung liegt in der besseren mechanischen Stabilität der Verbindung und der besseren Wärmeleitung zwischen den Modulen. "Lösbare Verbindung" meint hingegen solche Verbindungen, bei denen die Module nach deren Verbindung wieder beschädigungsfrei gelöst werden können. Hierzu zählen insbesondere Rast- oder Schraubverbindungen. Dies hat den Vorteil, dass die Module wiederverwendbar sind. Ferner können menschliche Fehler beim Aufbau der Strahlplatte wieder Rückgängig gemacht werden. Vorzugsweise stellen die Seitenwände Rastmittel bereit, die zur Herstellung der Rastverbindung miteinander wechselwirken können. Alternativ können gesonderte Rastelemente, insbesondere in Form einer Rastleiste vorgesehen sein, die in die an den Seitenwänden ausgebildeten Rastmittel, insbesondere in Form von Vorsprüngen oder Ausnehmungen, zur Herstellung der Rastverbindung eingreift.

Gemäß einer bevorzugten Ausgestaltung der Erfindung unterscheiden sich die beiden Seitenwände jedes Strahlplattenmoduls hinsichtlich ihrer Querschnittslänge ausgehend von der Strahlfläche voneinander. Die kurze Seitenwand dient dabei ausschließlich der Verbindung mit einem anderen Strahlplattenmodul. Sie ist bei einer bestimmungsgemäß aufgebauten Strahlplatte stets innenliegend und damit kein Teil der Strahlfläche. Die lange Seitenwand kann demgegenüber einerseits der Verbindung mit anderen Strahlplattenmodulen beim Aufbau der Strahlplatte dienen. Andererseits kann sie aber auch die seitliche Außenwand der fertigen Strahlplatte bilden, wobei sie das Innere des späteren Strahlheizkörpers verschließt und andererseits eine vergleichsweise große seitliche Strahlfläche bereitstellt. Ferner dient sie der Befestigung von mechanischen Verstärkungselementen. Durch die bevorzugte Ausgestaltung unterschiedlich langer Seitenwände wird in vorteilhafter Weise Material eingespart. Ferner ist jedes Strahlplattenmodul dadurch geeignet, an jeder beliebigen Position der aufzubauenden Strahlplatte eingebaut zu werden, da jedes Modul eine lange und eine kurze Seitenwand aufweist. Es ist dabei aus mechanischen Gründen der mechanischen Stabilität vorgesehen, dass nur Seitenwände gleicher Länge miteinander verbindbar sind.

Erfindungsgemäß kann die Strahlplatte mittels eines flüssigen Heizmediums, insbesondere Wasser, oder elektrisch erhitzt werden. Insbesondere bei vergleichsweise großen Flächen ist jedoch aus Gründen des Energieverbrauchs die Erhitzung mittels eines Heizmediums bevorzugt. Es ist in diesem Fall vorgesehen, dass die Strahlplattenmodule Rohraufnahmen für die Aufnahme jeweils eines Rohrs zur Führung des Heizmediums aufweisen. Die Rohraufnahmen sind dabei als Nuten ausgebildet. Die Nut weist vorzugsweise eine zu der Querschnittsgeometrie des Rohrs korrespondierende Querschnittsgeometrie auf. Die Nuten werden erstrecken sich dabei im Querschnitt vorzugsweise ausgehend von der Strahlfläche in entgegengesetzter Richtung der Seitenwände. Das Rohr kann dabei ein einzelnes Rohr oder Teil eines Rohrregisters sein. Die Rohraufnahmen verlaufen in Längsrichtung der Strahlplattenmodule. Sie verlaufen damit parallel zu den Seitenwänden. Vorzugsweise haben benachbarte Rohraufnahmen stets den gleichen Abstand zu einander. Hierdurch ist eine homogene Wärmeübertragung auf die Strahlfläche erreicht. Es ist prinzipiell möglich, vergleichsweise schmale Strahlplattenmodule auszubilden, die lediglich über eine in Längsrichtung verlaufende Rohraufnahme verfügt. Hierdurch lässt sich die raumseitig zu bedeckende Fläche in der Breite (in rechtem Winkel zur Längsrichtung des Strahlplattenmoduls und zur Längserstreckung der Rohraufnahmen) am besten ausnutzen, wodurch die Strahlungsleistung der resultierenden Strahlplatte optimiert ist. Dies ist insbesondere für eine vergleichsweise kleine zur Verfügung stehende Fläche von Vorteil. Nachteilig ist jedoch der hierbei der Montage und Materialaufwand. Es ist daher bei der Ausbildung vergleichsweise großer Strahlplatten von Vorteil, Strahlplattenmodule auszubilden, die wenigstens zwei zueinander parallel verlaufende Rohraufnahmen aufweisen. Besonders bevorzugt werden in dem erfindungsgemäßen System nur Strahlplattenmodule verwendet, die entweder zwei Rohraufnahmen (2er-Modul) oder drei Rohraufnahmen (3er-Modul) aufweisen. Durch die kombinatorische Verbindung derart ausgestalteter Strahlplattenmodule über Ihre jeweiligen Seitenwände können Strahlplatten mit im Querschnitt insgesamt wenigstens vier Rohraufnahmen ausgebildet werden. Es ist durch entsprechende Kombination möglich, der Mindestanzahl der Rohraufnahmen von vier jeweils eine weitere Rohraufnahme im Querschnitt hinzuzufügen. Dies illustrieren folgende Beispiele. Eine Kombination aus zwei 2er-Modulen ergibt insgesamt im Querschnitt vier Rohraufnahmen. Eine Kombination aus einem 2er-Modul und einem 3er-Modul ergibt insgesamt im Querschnitt fünf Rohraufnahmen. Eine Kombination aus zwei 3er-Modulen ergibt insgesamt im Querschnitt sechs Rohraufnahmen. Eine Kombination aus zwei 2er-Modulen und einem 3er-Modul ergibt insgesamt im Querschnitt 7 Rohraufnahmen. Eine Kombination aus zwei 3er-Modulen und einem 2er-Modul (oder aus vier 2er-Modulen) ergibt insgesamt im Querschnitt acht Rohraufnahmen. Die Reihe lässt sich durch entsprechende Kombination der Strahlplattenmodule beliebig verlängern. Die Anzahl der Rohraufnahmen ist aufgrund der äquidistanten Abstände stets auch eine Angabe für die Breite der resultierenden Strahlplatte. Auf diese Weise lässt sich eine Strahlplatte mit einer Anzahl von Rohraufnahmen aufbauen, die mit aus dem Stand der Technik bekannten Mitteln nicht möglich ist.

Es ist in diesem Zusammenhang bevorzugt vorgesehen, dass die Kupplungselemente ebenfalls Rohraufnahmen aufweisen, die in ihrer Positionierung mit denen der Strahlplattenmodule korrespondieren. Auch die Kupplungselemente können bevorzugt nach dem Vorbild der Strahlplattenmodule mit Bezug auf ihre Breite modular aufgebaut sein.

Es ist für die Herstellung der erfindungsgemäßen Strahlplattenmodule vorgesehen, bestehende Produktionseinrichtungen zu benutzen. Insofern ist es bevorzugt, ein Strahlplattenmodul aus einem plattenförmigen Metallrohling, vorzugsweise einem Stahlblech, mittels Pressen herzustellen. Die Seitenwände sind dabei dadurch gebildet, dass der Metallrohling in seinen einander gegenüberliegenden Randbereichen gegenüber der Strahlfläche in einem Winkel, vorzugsweise in einem rechten Winkel, umgebogen ist. In dem Fall, in dem die Seitenwände mit unterschiedlicher Querschnittslänge ausgebildet sind, sind diese dadurch gebildet, dass diese mit unterschiedlich breiten Pressstempeln umgebogen sind. Es ist gemäß dieser Ausgestaltung bevorzugt, dass die Rohraufnahmen, insbesondere in Form von Nuten mit halbkreisförmigem Querschnitt in den Metallrohling gepresst werden. Die Strahlplattenmodule sind damit vorzugsweise einstückig ausgebildet.
Gemäß einer bevorzugten Ausgestaltung der Erfindung ist eine in wenigstens einer Raumrichtung biegesteife Verstärkungsleiste vorgesehen, die der mechanischen Stabilisierung der resultierenden Strahlplatte dient. Es hat sich gezeigt, dass vergleichsweise breite Strahlplatten, insbesondere in Verwendung als Deckenstrahlplatte dazu neigen, sich aufgrund ihres Eigengewichts in Richtung der Schwerkraft zu wölben. Hierdurch kann die Wärmeübertragung zwischen Rohr und Strahlplatte unterbrochen werden. Die Verstärkungsleiste wirkt dem in vorteilhafter Weise entgegen. Es dazu vorgesehen, dass die Verstärkungsleiste beim Aufbau der Strahlplatte an den Strahlplattenmodulen zu befestigen. Dabei wird die Verstärkungsleiste vorzugsweise zwischen zwei einander gegenüberliegenden langen Seitenwänden angeordnet und an diesen befestigt. Die Befestigung erfolgt vorzugsweise formschlüssig, wobei sowohl die Seitenwände als auch die Verstärkungsleiste entsprechende, miteinander korrespondierende Befestigungsmittel aufweisen. Dies können innenliegende lange Seitenwände oder außen liegende lange Seitenwände sein. In einer besonderen Ausgestaltung ist vorgesehen, dass sich die Verstärkungsleiste zwischen den beiden einander gegenüberliegenden und die jeweilige Außenwand bildenden langen Seitenwänden erstreckt. Etwaige innenliegende lange Seitenwände werden von der Verstärkungsleiste vollständig übergriffen. Die innenliegenden langen Seitenwände der jeweiligen Strahlplattenmodule sind dabei von einer seitens der Verstärkungsleiste ausgebildeten Ausnehmung aufgenommen.

Die Erfindung betrifft ferner ein Strahlplattenmodul zur Verwendung in einem erfindungsgemäßen System aufweisend eine Strahlfläche und zwei auf gegenüberliegenden Seiten der Strahlfläche angeordnete und in Längsrichtung verlaufende Seitenwände, wobei die Seitenwände wenigstens ein Befestigungsmittel aufweisen, welches der Verbindung mit der Seitenwand eines anderen Strahlplattenmoduls dient. Das Befestigungsmittel kann im Falle einer Verschweißung oder einer Adhäsion als einfache Anlagefläche ausgebildet sein. Im Falle einer Verschraubung oder Verrastung sind die Befestigungsmittel insbesondere als Vorsprünge, Ausnehmungen, Schraublöcher, Nuten oder dergleichen ausgebildet.

Die Erfindung betrifft ferner ein Verfahren zum Aufbau einer hinsichtlich ihrer Flächenerstreckung variablen Strahlplatte aus einem modularen System gemäß der Erfindung bei dem wenigstens zwei Strahlplattenmodule an ihren einander zugewandten in Längsrichtung verlaufenden Seitenwänden miteinander verbunden werden.

Es ist dabei bevorzugt vorgesehen, dass die Strahlplattenmodule Seitenwände mit im Querschnitt unterschiedlicher Länge aufweisen, wobei nur die Seitenwände mit gleicher Länge miteinander verbunden werden.

Alle erfindungsgemäßen und bevorzugten Merkmale der Erfindung haben damit für sich genommen und in Kombination miteinander den synergetischen Effekt die Heizleistung von Strahlheizungen, insbesondere Deckenstrahlheizungen, durch eine optimierte Flächennutzung zu verbessern.

Die Erfindung wird nachfolgend anhand von Ausführungsbeispielen erläutert. Dabei zeigen:
- Fig.1: eine nach dem erfindungsgemäßen System zusammengesetzte Deckenstrahlplatte in perspektivischer Ansicht;
- Fig.2: weitere nach dem erfindungsgemäßen System aufgebaute Deckenstrahlplatten schematischer Ansicht im Querschnitt.

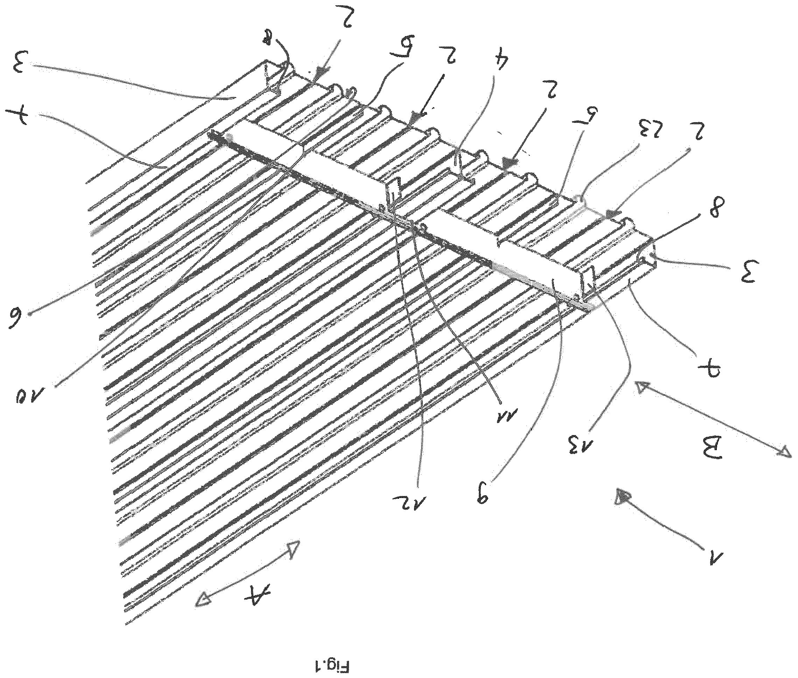

Figur 1 zeigt eine nach dem erfindungsgemäßen System zusammengesetzte Deckenstrahlplatte 1.

Die Deckenstrahlplatte 1 ist im vorliegenden Beispiel aus vier Strahlplattenmodulen 2. Die Strahlplattenmodule 2 weisen je zwei Rohraufnahmen 23 auf. Es handelt sich mithin um 2er-Module. Die Rohraufnahmen 23 sind als in Längsrichtung A verlaufende Nuten mit halbkreisförmigem Querschnitt ausgebildet. Die Rohraufnahmen 23 verlaufen parallel zueinander. Dabei sind alle Strahlplattenmodule 2 so ausgebildet, dass die Abstände zwischen Rohraufnahmen 23 jedes Strahlplattenmoduls 2 äquidistant sind.

Jedes Strahlplattenmodul 2 weist dabei im vorliegenden Beispiel eine lange Seitenwand 3,4 und eine kurze Seitenwand 5 auf. Die langen Seitenwände 3 bilden dabei die seitliche Außenwand der Deckenstrahlplatte 1. Demgegenüber sind die langen Seitenwände 4 innenliegend angeordnet. Die innenliegenden Seitenwände 4 dienen dabei der zusätzlichen mechanischen Stabilisierung der Deckenstrahlplatte 1

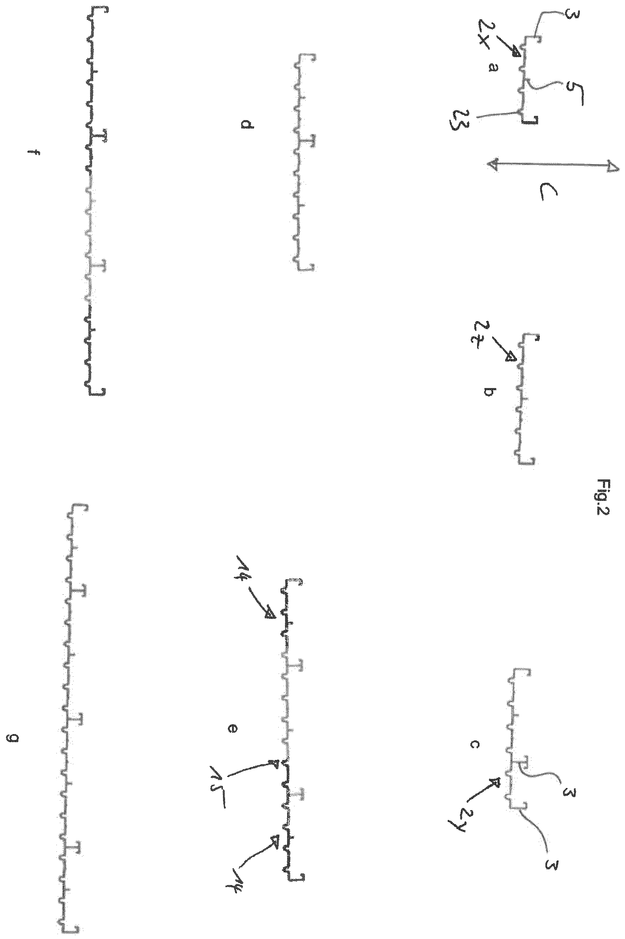

Die kurzen Seitenwände 5 dienen ausschließlich der Verbindung zweier benachbarter 2er-Module 2 und sind alle innenliegend angeordnet. Die Angabe "lang" und "kurz" bezieht sich in diesem Zusammenhang auf die Länge derjenigen Teile der Seitenwände 3,4,5 welche sich im rechten Winkel zu der Strahlfläche 6 der Deckenstrahlplatte 1 erstrecken. In Figur 2 ist diese Erstreckungsrichtung als Richtung C abgebildet.

Die Strahlplattenmodule 2 sind vorliegend aus Stahlblechrohlingen mittels Pressens einstückig hergestellt. Die Seitenwände 3,4,5 sind dabei gegenüber den jeweils angrenzenden Abschnitten der Strahlflächen 6 um 90°umgebogen.

Als weiteres Verstärkungselement weisen die langen Seitenwände 3,4 endseitig jeweils zwei weitere Abschnitte 7,8 auf, welche jeweils um weitere 90° umgebogen sind. Hierdurch sind die Strahlplattenmodule 2 und die Deckenstrahlplatte 1 in vorteilhafter Wiese versteift ausgebildet.

Ferner abgebildet ist eine Verstärkungsleiste 9 erfüllt vorliegend eine Doppelfunktion. Einerseits dient sie der mechanischen Stabilisierung der Deckenstrahlplatte in Breitenrichtung B. Andererseits verbindet sie die jeweiligen einander zugewandten Seitenwände 4,5 der Strahlplattenmodule 2 miteinander. Zur Verbindung der kurzen Seitenwände 5 stellt sie Schlitze 10 bereit, die die freien Enden der kurzen Seitenwände 5 miteinander verklemmen. Zur Verbindung der langen Seitenwände 4 stellt die Verstärkungsleiste 9 eine Ausnehmung 11 bereit, in welcher die Seitenwände 4 aufgenommen sind. Zur weiteren Befestigung der Verstärkungsleiste 9 an den langen Seitenwänden 3,4 sowie zur Verklemmung der innenliegenden Seitenwände 4 miteinander weist die Verstärkungsleiste 9 plattenförmige Befestigungsabschnitte 12,13 auf, welche mit den umgebogenen Abschnitten 7,8 zur Herstellung einer lösbaren Verbindung wechselwirken.

Auch die Verstärkungsleiste 9 ist vorliegend aus Stahl gebildet.

Figur 2 zeigt eine Auswahl an mittels des erfindungsgemäßen Systems und des erfindungsgemäßen Verfahrens aufbaubaren Deckenstrahlplatten a bis g.

Das erfindungsgemäße System umfasst vorliegend Strahlplattenmodule 2x mit zwei Rohraufnahmen 3 sowie einer kurzen Seitenwand 5 und einer langen Seitenwand 3 (2er-Modul). Ferner umfasst das System vorliegend Strahlplattenmodule 2y mit zwei Rohraufnahmen 23 sowie zwei langen Seitenwänden 3 (2'er-Modul). Ferner umfasst das System vorliegend Strahlplattenmodule 2z mit drei Rohraufnahmen 3 sowie einer kurzen Seitenwand 5 und einer langen Seitenwand 3 (3er-Modul). Vorzugsweise sind die drei Gruppen von Strahlplattenmodulen 2x,y,z die einzigen im System verwendeten Strahlplattenmodule. Aus vorgenannten Strahlplattenmodulen 2x,y,z lassen beispielhaft sich die nachfolgenden Deckenstrahlplatten zusammensetzen.

Deckenstrahlplatte a ist vorliegend zusammengesetzt aus zwei 2er-Modulen und weist damit insgesamt vier Rohraufnahmen 23 auf.

Deckenstrahlplatte b ist vorliegend zusammengesetzt aus zwei 3er-Modulen und weist damit insgesamt sechs Rohraufnahmen 23 auf.

Deckenstrahlplatte c ist vorliegend zusammengesetzt aus zwei 2er-Modulen und einem 2'er-Modul und weist damit insgesamt sechs Rohraufnahmen 23 auf.

Deckenstrahlplatte d ist vorliegend zusammengesetzt aus zwei 2er-Modulen und zwei 3er-Modulen und weist damit insgesamt 10 Rohraufnahmen 23 auf.

Deckenstrahlplatte e ist vorliegend zusammengesetzt aus vier 2er-Modulen, wobei jeweils zwei 2er-Module zu einem Kombinationsmodul 14 verbunden ist und zwei 3er-Modulen, die zu einem Kombinationsmodul 15 verbunden ist. Die beiden Kombinationsmodule 14 sind unter Zwischenordnung des Kombinationsmoduls 15 miteinander verbunden. Die Deckenstrahlplatte e weist damit insgesamt 14 Rohraufnahmen 23 auf.

Deckenstrahlplatte f ist vorliegend zusammengesetzt aus drei Kombinationsmodulen 15 und weist damit insgesamt 18 Rohraufnahmen 23 auf.

Deckenstrahlplatte g ist vorliegend zusammengesetzt aus zwei Kombinationsmodulen 14 und zwei Kombinationsmodulen 15. Die beiden Kombinationsmodule 14 sind unter Zwischenordnung der beiden Kombinationsmodule 15 miteinander verbunden. Die Deckenstrahlplatte g und weist damit insgesamt 20 Rohraufnahmen 23 auf.

Anhand dieser Beispiele ist ersichtlich, dass sich die Deckenstrahlplatte 1 in Richtung B durch entsprechende Kombination der erfindungsgemäßen 2er- und 3er-Module beliebig verbreitern lässt. Es kann damit eine Deckenstrahlplatte 1 mit durchgängiger Strahlfläche 6 bereitgestellt werden, die an jede beliebe Fläche anpassbar ist.

### Bezugszeichen

- 1: Deckenstrahlplatte
- 2: Strahlplattenmodul
- 3: lange Seitenwand
- 4: lange Seitenwand
- 5: kurze Seitenwand
- 6: Strahlfläche
- 7: umgebogener Abschnitt
- 8: umgebogener Abschnitt
- 9: Verstärkungsleiste
- 10: Schlitz
- 11: Ausnehmung
- 12: Befestigungsabschnitt
- 13: Befestigungsabschnitt
- 14: Kombinationsmodul
- 15: Kombinationsmodul
- 23: Rohraufnahme

- A: Längsrichtung
- B: Breitenrichtung
- C: Querschnittslängenrichtung

## Patentansprüche

1. Modulares System zum Aufbau einer hinsichtlich ihrer Flächenerstreckung variablen Strahlplatte, insbesondere Heizstrahlplatte, aufweisend eine Mehrzahl von Strahlplattenmodulen aus welchen die Strahlplatte zusammensetzbar ist, wobei jedes Strahlplattenmodul eine Strahlfläche und zwei auf gegenüberliegenden Seiten der Strahlfläche angeordnete und in Längsrichtung des Strahlplattenmoduls verlaufende Seitenwände aufweist, wobei die Strahlplattenmodule über ihre jeweiligen Seitenwände miteinander verbindbar sind.

2. System nach Anspruch 1, **dadurch gekennzeichnet, dass** sich die Seitenwände in einem Winkel, insbesondere in einem rechten Winkel, gegenüber der Strahlfläche und zumindest abschnittsweise parallel zueinander erstrecken, wobei bei wenigstens einem Teil der Strahlplattenmodule die beiden Seitenwände im Querschnitt eine voneinander verschiedene Länge aufweisen.

3. System nach Anspruch 2, **dadurch gekennzeichnet, dass** nur Seitenwände gleicher Länge miteinander verbindbar sind.

4. System nach einem der Ansprüche 1 bis 3, **dadurch gekennzeichnet, dass** die Strahlplattenmodule mit zwei unterschiedlichen Breiten ausgebildet sind, wobei die schmaleren Strahlplattenmodule jeweils zwei Rohraufnahmen für die Aufnahme jeweils eines Rohrs zur Führung eines Heizmediums aufweist, welche in Längsrichtung parallel zueinander verlaufen und wobei die breiteren Strahlplattenmodule jeweils drei Rohraufnahmen aufweisen.

5. System nach Anspruch 4, **dadurch gekennzeichnet, dass** unmittelbar benachbarte Rohraufnahmen innerhalb eines jeden Strahlplattenmoduls den gleichen Abstand zueinander aufweisen.

6. System nach einem der Ansprüche 1 bis 5, **dadurch gekennzeichnet, dass** die Strahlplattenmodule jeweils aus einem plattenförmigen Metallrohling gebildet sind, wobei die Seitenwände dadurch gebildet sind, dass sie relativ zur Strahlfläche umgebogen sind.

7. System nach Anspruch 6, **dadurch gekennzeichnet, dass** die Rohraufnahmen durch in den Metallrohling eingepresste, vorzugsweise im Querschnitt halbkreisförmige, Nuten gebildet sind.

8. System nach einem der Ansprüche 1 bis 7, **gekennzeichnet durch** wenigstens eine biegesteife Verstärkungsleiste, welche an den Innenseiten einander gegenüberliegend verlaufender Seitenwände befestigbar ist.

9. System nach einem der Ansprüche 1 bis 8, **gekennzeichnet durch** Kuppelelemente, insbesondere Kuppelbleche, wobei ein Kuppelelement zur Verbindung zweier Strahlplattenmodule in Längsrichtung an den jeweiligen Stirnseiten der Strahlplattenmodule befestigbar ist.

10. Strahlplattenmodul zur Verwendung in einem modularen System nach einem der Ansprüche 1 bis 9, aufweisend eine Strahlfläche und zwei auf gegenüberliegenden Seiten der Strahlfläche angeordnete und in Längsrichtung verlaufende Seitenwände, **dadurch gekennzeichnet, dass** die Seitenwände wenigstens ein Befestigungsmittel aufweisen, welches der Verbindung mit der Seitenwand eines anderen Strahlplattenmoduls dient.

11. Strahlplattenmodul nach Anspruch 10, **dadurch gekennzeichnet, dass** sich die Seitenwände in einem Winkel, insbesondere in einem rechten Winkel, gegenüber der Strahlfläche und zumindest abschnittsweise parallel zueinander erstrecken, wobei bei wenigstens einem Teil der Strahlplattenmodule die beiden Seitenwände im Querschnitt eine voneinander verschiedene Länge aufweisen.

12. Strahlplattenmodul nach einem der Ansprüche 10 oder 11, **gekennzeichnet durch** wenigstens zwei Rohraufnahmen für die Aufnahme jeweils eines Rohrs zur Führung eines Heizmediums, welche in Längsrichtung parallel zueinander verlaufen.

13. Strahlplattenmodul nach Anspruch 12, **dadurch gekennzeichnet, dass** unmittelbar benachbarte Rohraufnahmen den gleichen Abstand zueinander aufweisen.

14. Verfahren zum Aufbau einer hinsichtlich ihrer Flächenerstreckung variablen Strahlplatte aus einem modularen System nach einem der Ansprüche 1 bis 9 bei dem wenigstens zwei Strahlplattenmodule an ihren einander zugewandten in Längsrichtung verlaufenden Seitenwänden miteinander verbunden werden.

15. Verfahren nach Anspruch 14, **dadurch gekennzeichnet, dass** Strahlplattenmodule Seitenwände mit im Querschnitt unterschiedlicher Länge aufweisen, wobei nur die Seitenwände mit gleicher Länge miteinander verbunden werden.
